# EUROPÄISCHE PATENTSCHRIFT

(11) **EP 0 677 752 B1**
(45) Veröffentlichungstag und Bekanntmachung des Hinweises auf die Patenterteilung: **27.06.2001**
(21) Anmeldenummer: 95105048.3
(22) Anmeldetag: 04.04.1995
(51) Int. Cl.: G01S 13/02, G06K 7/10, G01V 15/00

(54) **Sensorsystem**
Sensor System
Système pour détection

(30) Priorität: 15.04.1994 DE 4413211
(43) Veröffentlichungstag der Anmeldung: 18.10.1995
(73) Patentinhaber: SIEMENS AKTIENGESELLSCHAFT, 80333 München (DE)
(72) Erfinder: Scholl, Gerd, D-80636 München (DE); Ruile, Werner, D-80636 München (DE); Ostertag, Thomas, D-89075 Ulm (DE); Reindl, Leonhard, D-83071 Stephanskirchen (DE)

(56) Entgegenhaltungen:
- WO-A-86/02186
- DE-A- 4 217 049
- GB-A- 2 191 368
- US-A- 4 069 472

## Beschreibung

Die vorliegende Erfindung betrifft ein Sensorsystem nach dem Oberbegriff des Patentanspruchs 1.

Es ist ein von der Anmelderin entwickeltes mit SICARID bezeichnetes Mikrowellen-Abfragesystem bekannt geworden, bei dem in einem Lesegerät ein Sender vorgesehen ist, der Mikrowellen abstrahlt, welche von einem auf einem zu identifizierenden Objekt vorgesehenen Antwortgerät reflektiert, vom Empfänger im Lesegerät wieder aufgenommen und anschließend weiter verarbeitet werden. Das Antwortgerät enthält auf unterschiedliche Resonanzfrequenzen abgestimmte Koaxialresonatoren. Der Sendefrequenzbereich liegt dabei im GHz-Gebiet. Der Sendefrequenzbereich wird zeitlich durchgewobbelt, wobei die Resonatoren der vom Antwortgerät empfangenen und reflektierten Welle immer dann Energie entziehen, wenn die augenblickliche Sendefrequenz mit der Resonanzfrequenz eines der Resonatoren übereinstimmt. Dadurch wird die im Antwortgerät kodierte Information der reflektierten Welle aufmoduliert und an das Lesegerät übertragen. Da ein derartiges System im GHz-Bereich arbeitet und dabei speziell an diesen Frequenzbereich angepaßte Resonatoren vorgesehen werden müssen, und eine große Systembandbreite sowie lange Abfragezeiten notwendig sind, so daß es für bestimmte Anwendungsfälle noch zu komplex, d. h. unter anderem teuer, unhandich, langsam und groß ist.

Es sind weiterhin beispielsweise aus der "Siemens-Zeitschrift", Spezial FuE, Frühjahr 1993 Identifizierungssysteme mit einem Sende/Empfangsgerät und mit von diesem abfragbaren mit akustischen Oberflächenwellen arbeitenden Identifizierungsmarken - ID-Tags - bekannt geworden. Derartige ID-Tags sind Bauelemente, in denen ein elektrisches Signal mittels eines Wandlers in eine akustische Oberflächenwelle umgesetzt wird, welche an einer Folge von Reflektoren reflektiert wird, wobei die reflektierte akustische Oberflächenwelle durch einen Wandler, welcher gleich dem das elektrische Eingangssignal umsetzenden Wandler sein kann, wieder in ein elektrisches Signal umgesetzt wird. In Abhängigkeit von der Konfiguration der Reflektoren entsteht ein vorgegebener Code, welcher dieses ID-Tag repräsentiert. Das den Code repräsentierende elektrische Signal wird auf das Empfangsgerät zurückgesendet, wodurch die Stelle identifizierbar ist, an der das ID-Tag angeordnet ist. Derartige Identifizierungssysteme sind in einer großen Vielzahl von Anwendungsfällen verwendbar.

Entsprechende Systeme sind auch als Funkabfragegeräte für mit akustischen Oberflächenwellen arbeitende Sensoren - OFW-Sensoren - verwendbar. Der OFW-Sensor definiert dabei mindestens einen über Funk abfragenden Parameter.

Bei bisherigen ID-Tags und OFW-Sensoren findet die Codierung der Information im Zeitbereich statt. Aufgrund der relativ kurzen realisierbaren Laufstrecken muß die Information in kurzer Zeit übertragen und ausgewertet werden. Dies erfordert eine große Systembandbreite, was gegen die ständig steigende Forderung der Frequenzökonomie verstößt und deshalb eine Realisierung im unteren UHF-Bereich sehr erschwert.

Da die Systeme eine relativ große Bandbreite benötigen, können derartige Bandbreiten nur bei hohen Mittenfrequenzen von den Fernmeldeverwaltungen zur Verfügung gestellt werden. Dies führt zu technologischen Schwierigkeiten bei der Herstellung von OFW-Bauteilen, aber auch zu einer unvermeidbar hohen Dämpfung der OFW-Signale.

Aus der US-4 069 472 ist ein Identifizierungssystem bekannt, bei dem ein durch Resonatoren mit unterschiedlicher Resonanzfrequenz festgelegter Kode über ein Funksignal fernabgefragt werden kann. Dabei erzeugt eine Sende-/Empfangseinheit ein Abfragesignal, welches von dem Identifizierungssystem empfangen wird und mittels eines Frequenzmischers auf eine niedrigere Frequenz heruntergemischt wird. Die im Identifizierungssystem vorgesehenen Resonatoren werden zur Resonanz angeregt und bilden einen, aus ihren Eigenfrequenzen bestehenden Kode, der an das Sende-/Empfangsgerät zurückgesendet wird.

Aus der DE 42 17 049 A1 ist ein passiver Sensor auf der Basis eines Oberflächenwellenbauelements bekannt, bei dem mittels einer Sende-/Empfangseinheit ein Abfragesignal erzeugt und zu dem Sensor gesendet wird. Der Sensor empfängt das Signal, modifiziert es und sendet ein Antwortsignal zurück. Die Modifikation erfolgt dabei unter Einwirkung eines äußeren Parameters, für den der Sensor empfindlich ist. Über die Einwirkung kann die Größe des Parameters im Empfangsgerät bestimmt werden.

Aus der WO 86/02186 A1 ist ein Identifizierungssystem bekannt, welches eine Sende-/Empfangseinheit und eine Anordnung mit mehreren passiven Resonatoren umfaßt. Mittels der Sende/Empfangseinheit wird ein von einer Anordnung mehrerer Resonatoren auf ein entsprechendes Abfragesignal empfangenes Antwortsignal auf das Vorliegen bestimmter, den Resonatoren zugeordneter Eigenfrequenzen untersucht. Ein Resonator ist insbesondere eine elektrisch leitfähige Spirale auf einem nichtleitenden Träger.

Der vorliegenden Erfindung liegt die Aufgabe zugrunde, ein Sensorsystem anzugeben, das mit geringerer Bandbreite arbeiten kann.

Diese Aufgabe wird bei einem Sensorsystem der eingangs genannten Art erfindungsgemäß durch die Merkmale des kennzeichnenden Teils des Patentanspruchs 1 gelöst.

Weiterbildungen der Erfindung sind Gegenstand von Unteransprüchen.

Die Erfindung wird nachfolgend anhand von in den Figuren der Zeichnung dargestellten Ausführungsbeispielen näher erläutert. Es zeigt:
- Figur 1: in schematischer Darstellung ein Funkabfragesystem mit einem Sende/Empfangsgerät und einem OFW-Bauelement als abzufragendes Element;
- Figur 2: eine Ausführungsform von OFW-Resonatoren für ein über Funk abzufragendes OFW-Bauelement;
- Figur 3: eine abgewandelte der Ausführungsform nach Figur 2 entsprechende Ausführungsform; und
- Figur 4: Ausführungsformen von Reflektoren für OFW-Resonatoren der erfindungsgemäßen Art.
Von der Beschreibung und Erläuterung des Ausführungsbeispiels sei zunächst grundsätzlich auf folgendes hingewiesen.

Wie bereits oben ausgeführt, sind bei bekannten Systemen nach Art des SICARID-Systems Resonatoren auf unterschiedliche Frequenzen abgestimmt, wobei das Abfragesignal durch ein entsprechendes Frequenzband durchgestimmt wird. Jedes Mal, wenn die Frequenz eines der Resonatoren erreicht wird, entzieht dieser Resonator dem Abfragesignal Leistung, wodurch das Abfragegerät das Vorhandensein des Resonators "bemerkt".

Beim erfindungsgemäßen System ist der Kern darin zu sehen, daß die Resonatoren eine so hohe Güte besitzen, daß sie Energie zu speichern vermögen. Bei einem breitbandigen Abfrageimpuls speichern sie also Energie, die nach einer Zeitfunktion abklingt, aber zum Empfangsgerät zurückgesendet wird.

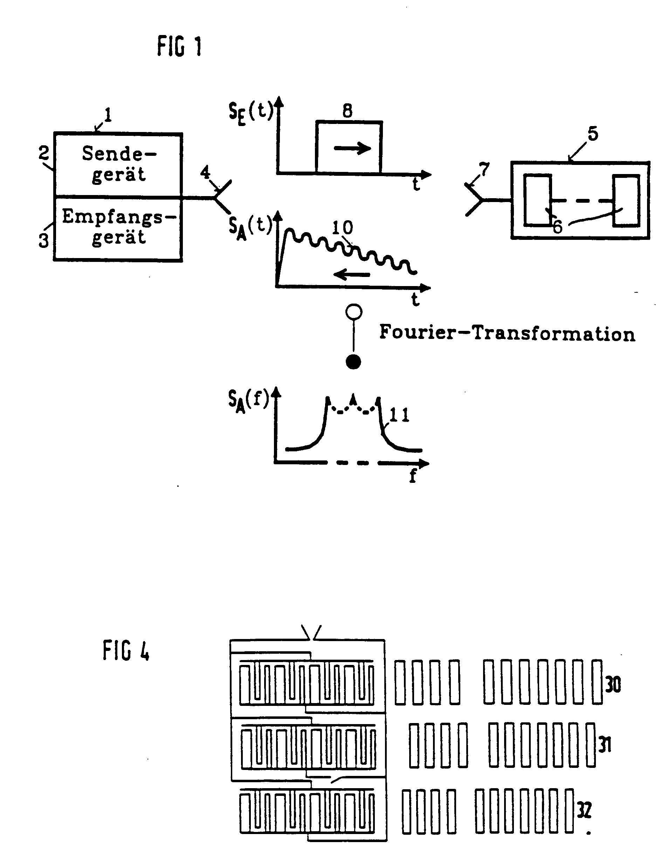

Gemäß Figur 1 der Zeichnung besteht ein an sich bekanntes Sende/Empfangsgerät 1 für ein Funkabfragesystem aus einem Sendegerät 2, einem Empfangsgerät 3 sowie eine daran angekoppelte Antenne 4. Diese Antenne kann sowohl als Sendeantenne für vom Sendegerät 2 ausgesendete Abfragesignale als auch als Empfangsantenne für vom Empfangsgerät 3 zu empfangende Signale verwendet werden. Sende- und Empfangsgerät 2, 3 können entweder getrennte Geräte oder in einem einzigen Gerät integriert sein. Da derartige Komponenten an sich bekannt sind, brauchen sie hier nicht näher erläutert zu werden.

Ein durch das Sende/Empfangsgerät 1 abzufragendes OFW-Baüelement 5 besitzt eine Antenne 7, welche einen vom Sendegerät 2 des Sende/Empfangsgerätes 1 ausgesendeten Abfrageimpuls 8 mit einer Amplitude s_{(E)}(t) aufnimmt.

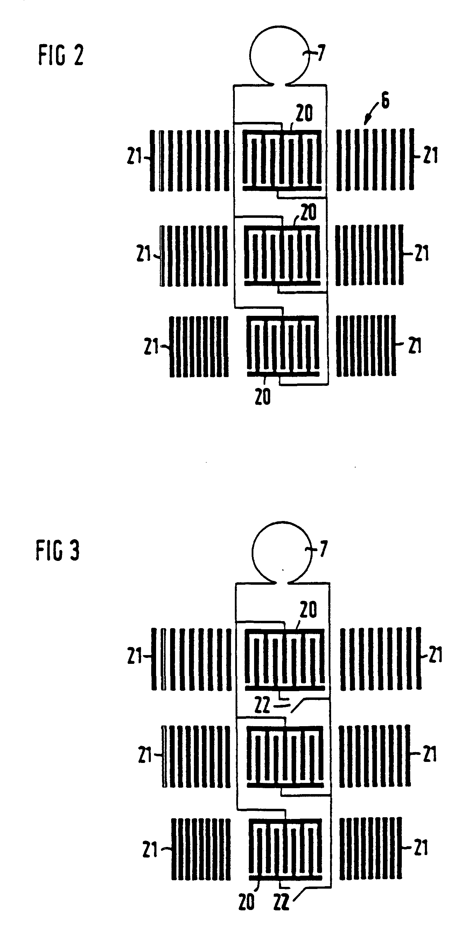

Erfindungsgemäß sind auf dem OFW-Bauelement 5 - in Figur 1 schematisch dargestellte - OFW-Resonatoren 6 vorgesehen. Wie anhand der Figuren 2 und 3 noch näher erläutert wird, enthalten diese Resonatoren 6 jeweils einen elektrisch an die Antenne 7 angekoppelten Interdigitalwandler, welcher das von der Antenne 7 aufgenommene elektrische Signal in eine akustische Oberflächenwelle umsetzt. Weiterhin enthalten die Resonatoren 6 Reflektoren, in welche die akustische Oberflächenwelle einläuft und reflektiert wird. Die Welle wird dabei auf den Interdigitalwandler rückreflektiert und in ein elektrisches Signal rückübersetzt, das über die Antenne 7 abgestrahlt wird und über die Antenne 4 vom Empfangsgerät 3 im Sende/Empfangsgerät 1 aufgenommen wird.

Figur 2 zeigt eine Ausführungsform einer über Funk abfragbaren Identifizierungs- und/oder Sensoranordnung, die hier ein OFW-Bauelement in Form eines ID-Tags 5 ist. An der Antenne 7 liegt parallel eine Anzahl von OFW-Resonatoren, die jeweils durch einen elektrisch an der Antenne 7 liegenden Interdigitalwandler 20 sowie Reflektoren 21 auf gegenüber liegenden Seiten des Interdigitalwandler 20 gebildet werden. Die Anzahl der Reflektoren ist dabei durch die für das ID-Tag vorgesehene Codierung vorgegeben. Es ist darauf hinzuweisen, daß ein OFW-Bauelement und OFW-Resonatoren lediglich ein Beispiel darstellt. Es können auch Resonatoren anderer Art, beispielsweise keramische Hochfrequenzresonatoren oder ähnliches verwendet werden.

Der vorliegenden Erfindung liegt dabei die Idee zugrunde, daß bei OFW-Bauelementen der in Rede stehenden Art eine akustische Laufzeit realisiert ist, die ein Vielfaches der Länge des (nicht dargestellten) piezoelektrischen Substrates entspricht, auf dem die Interdigitalwandler 20 und die Reflektoren 21 ausgebildet sind. Dabei ergibt sich eine Mehrfachausnutzung der zur Verfügung stehenden Substratlänge. Die so erzielbaren langen Laufzeiten ermöglichen eine schmalbandige Übertragung der Information. Daher kann in einem relativ schmalbandigen Frequenzband eine große Anzahl von Informationen untergebracht werden.

Anstelle der bisher bei ID-Tags zur Anwendung kommenden Codierung im Zeitbereich erfolgt erfindungsgemäß eine Codierung im Frequenzbereich. Durch einen Frequenzversatz der Resonatoren, was gemäß Figur 2 durch unterschiedliche geometrische Ausbildung der Reflektoren, z. B. einen unterschiedlichen Abstand von Elektrodenfingern in den Reflektoren für die jeweiligen Resonatoren realisiert werden kann, kommt die Codierung im Frequenzbereich zustande.

Bei Abfrage eines derartigen ID-Tag mit einem Impuls 8 gemäß Figur 1 ergibt sich ein auf das Empfangsgerät rückgesendetes Signal, dessen Amplitude s(t) als Funktion der Zeit t gemäß einer Kurve 10 zeitlich abklingt, wobei sich der Anzahl der Resonatoren 6 im ID-Tag 5 entsprechende Resonanzen ergeben.

Im Empfangsgerät 3 des Sende-/Empfangsgerätes 1 ist eine an sich bekannte Fourier-Transformationsanordnung vorgesehen, welche die Zeitfunktion s(t) nach Figur 1 in eine entsprechende Frequenzfunktion s(f) gemäß einer unteren Kurve 11 in Figur 1 transformiert, in dem die Amplitude in Abhängigkeit von der Frequenz f aufgetragen ist. Die Spitzen in dieser Kurve 11 entsprechen den Resonanzfrequenzen der Resonatoren 6 im ID-Tag 5. Im unteren Diagramm nach Figur 1 sind der Einfachheit halber lediglich drei Frequenzspitzen dargestellt, wobei der mittlere Teil der Kurve 11 gestrichelt dargestellt ist, um anzudeuten, daß in dieser Kurve noch mehrere Frequenzspitzen entsprechend der Anzahl der Resonatoren 6 im ID-Tag vorhanden sein können.

Eine Codierung eines ID-Tags der in Figur 2 dargestellten Art kann gemäß Figur 3 beispielsweise dadurch erfolgen, daß eine vorgegebene feste Anzahl von Resonatoren vorgesehen ist, wobei bestimmte Resonatoren über Schalter 22 elektrisch in den Kreis der Antenne 7 ein- und ausgeschaltet werden können. Im übrigen sind in Figur 3 gleiche Elemente wie in Figur 2 mit gleichen Bezugszeichen versehen. Diese Art der Codierung stellt eine Amplitudenmodulation dar.

In Weiterbildung der Erfindung kann auch eine Quadratur-Amplitudenmodulation zur Anwendung kommen, bei der zusätzliche Information durch die Phase bzw. die relative Phasenlage von frequenzversetzten Resonatoren zueinander übertragen wird. Eine derartige Ausführungsform ist schematisch in Figur 4 dargestellt, welche lediglich Reflektoren 30 bis 32 von OFW-Resonatoren zeigt. Dabei kommt die Phaseninformation durch unterschiedliche geometrische Anordnung von Elektrodenfingern in den einzelnen Reflektoren 30, 31 und 32 zustande.

In einem erfindungsgemäßen System ist die Bandbreite durch die Zahl der voneinander unabhängigen Informationszustände und die Güte der Resonatoren, die den frequenzmäßigen Abstand der Informationszustände bestimmt, festgelegt. Wie bereits ausgeführt, wird ein Abfrageimpuls in Form des Impulses 8 mit relativ schmalbandigem Frequenzspektrum, das die benötigte Systembandbreite überdeckt, verwendet. Gemäß den Diagrammen nach Figur 1 werden die überlagerten Impulsantworten aller Resonatoren empfangen, wobei durch Fourier-Transformation aus dem ursprünglich im Zeitbereich vorliegenden rückgesendeten Signal die Information im Frequenzbereich gewonnen wird.

Ein erfindungsgemäßes System eignet sich nicht nur für eine Abfrage von ID-Tags im oben beschriebenen Sinne, sondern auch für sensorische Zwecke, wobei ein abzufragender Parameter in Form einer äußeren physikalischen Größe die OFW-Geschwindigkeit beeinflußt. Dadurch ändert sich die Mittenfrequenz und die relative Phase der Resonatoren.

## Patentansprüche

1. Sensorsystem mit einem Sende- und Empfangsgerät (2, 3), das über Funk Abfragesignale zu einer stromversorgungslosen Sensoranordnung (5) aussendet und von dieser rückgesendete Antwortsignale empfängt und auswertet, wobei in der Sensoranordnung (5) zur Festlegung mindestens eines abzufragenden Parameters mehrere Resonatoren (6) vorgesehen sind, die von dem Parameter beeinflußt werden, wobei das Sende- und Empfangsgerät (2, 3) ein Gerät mit einer die Resonanzfrequenzen der Resonatoren (6) enthaltenden Bandbreite ist,
**dadurch gekennzeichnet**,
daß das Sende- und Empfangsgerät (2, 3) eingerichtet ist zur Fourier-Transformation jedes Antwortsignals in eine Frequenzfunktion und Gewinnung von Information über den Parameter aus der Frequenzfunktion.

2. System nach Anspruch 1,
bei dem das Sendegerät (2) zur Aussendung eines breitbandigen Abfrageimpulses ausgebildet ist und das Empfangsgerät (3) eine Fourier-Transformationsanordnung zur Transformierung eines von der Sensoranordnung (5) rückgesendeten im Amplituden/Zeitspektrum vorliegenden Signals in ein Amplituden-Frequenzspektrum enthält.

3. System nach einem der Ansprüche 1 oder 2,
**gekennzeichnet durch** unterschiedliche Phasenlagen der Resonatoren.

4. System nach einem der Ansprüche 1 bis 3,
bei dem zumindest ein durch eine äußere physikalische Größe beeinflußbarer Oberflächenwellenresonator vorgesehen ist.

5. System nach Anspruch 4,
**dadurch gekennzeichnet,**
daß bei Vorhandensein mehrerer Resonatoren unterschiedliche Mittenfrequenzen der Resonatoren vorgesehen sind.

## Claims

1. Sensor system having a transmitting and receiving device (2, 3), which transmits interrogation signals by radio to a sensor arrangement (5) which has no power supply, and receives and evaluates response signals transmitted back from the latter, a number of resonators (6) being provided in the sensor arrangement (5) for determining at least one parameter which is to be interrogated and is influenced by the parameter, the transmitting and receiving device (2, 3) being a device with a bandwidth which includes the resonant frequencies of the resonators (6), characterized in that the transmitting and receiving device (2, 3) is set up for the Fourier transformation of each response signal into a frequency function and to obtain information about the parameter from the frequency function.

2. System according to Claim 1, in which the transmitting device (2) is designed for transmitting a broadband interrogation pulse and the receiving device (3) contains a Fourier transformation arrangement for transforming a signal, transmitted back by the sensor arrangement (5) and present in the amplitude/time spectrum, into an amplitude/frequency spectrum.

3. System according to either of Claims 1 or 2, characterized by different phase positions of the resonators.

4. System according to one of Claims 1 to 3, in which at least one SAW resonator is provided which can be influenced by an external physical variable.

5. System according to Claim 4, characterized in that, when a plurality of resonators is present, different mid-frequencies of the resonators are provided.

## Revendications

1. Système de détection muni d'un appareil émetteur-récepteur (2, 3) qui émet par radio des signaux d'interrogation en direction d'un dispositif de détection (5) non alimenté en courant, et qui reçoit et évalue des signaux de réponse renvoyés par celui-ci, dans le dispositif de détection (5) étant prévus, pour définir au moins un paramètre à interroger, plusieurs résonateurs (6) qui sont influencés par ledit paramètre, l'appareil émetteur-récepteur (2, 3) étant un appareil ayant une bande passante contenant les fréquences de résonance des résonateurs (6), caractérisé en ce que l'appareil émetteur-récepteur (2, 3) est étudié pour la transformation de Fourier permettant de transformer chaque signal de réponse en une fonction de fréquence et pour l'obtention d'informations sur le paramètre à partir de ladite fonction de fréquence.

2. Système selon la revendication 1, dans lequel l'appareil émetteur (2) est réalisé pour l'émission d'une impulsion d'interrogation à large bande et dans lequel l'appareil récepteur (3) contient un dispositif de transformation de Fourier pour transformer un signal renvoyé par le dispositif de détection (5) et se trouvant dans le spectre d'amplitude et de temps, en un spectre d'amplitude et de fréquence.

3. Système selon l'une des revendications 1 ou 2, caractérisé par différentes positions de phase des résonateurs.

4. Système selon l'une des revendications 1 à 3, dans lequel est prévu au moins un résonateur à ondes de surface influençable par une grandeur physique externe.

5. Système selon la revendication 4, caractérisé en ce qu'en présence de plusieurs résonateurs, différentes fréquences centrales des résonateurs sont prévues.
